(19) **Europäisches Patentamt / European Patent Office / Office européen des brevets**

(11) **EP 4 139 035 B1**

(12) **EUROPÄISCHE PATENTSCHRIFT**

(45) Veröffentlichungstag und Bekanntmachung des Hinweises auf die Patenterteilung:
**25.10.2023 Patentblatt 2023/43**

(21) Anmeldenummer: **21719925.6**

(22) Anmeldetag: **22.04.2021**

(51) Internationale Patentklassifikation (IPC):
**B01J 8/00** (2006.01)  **B01J 8/06** (2006.01)

(52) Gemeinsame Patentklassifikation (CPC):
**B01J 8/001; B01J 8/067; B01J 19/002; B01J 19/087;** B01J 2208/00637; B01J 2219/00263; B01J 2219/00268; B01J 2219/00272; Y02P 20/54

(86) Internationale Anmeldenummer:
**PCT/EP2021/060601**

(87) Internationale Veröffentlichungsnummer:
**WO 2021/214257 (28.10.2021 Gazette 2021/43)**

(54) **REAKTOR UND VERFAHREN ZUR DURCHFÜHRUNG EINER CHEMISCHEN REAKTION**

REACTOR AND METHOD FOR PERFORMING A CHEMICAL REACTION

RÉACTEUR ET PROCÉDÉ DE RÉALISATION D'UNE RÉACTION CHIMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2020 EP 20171196**

(43) Veröffentlichungstag der Anmeldung:
**01.03.2023 Patentblatt 2023/09**

(73) Patentinhaber:
- **Linde GmbH**
  **82049 Pullach (DE)**
- **BASF SE**
  **67056 Ludwigshafen am Rhein (DE)**

(72) Erfinder:
- **HOFSTÄTTER, Martin**
  **81369 München (DE)**
- **ZELLHUBER, Mathieu**
  **82152 Martinsried (DE)**
- **REISER, Peter**
  **82541 Münsing (DE)**
- **KIESE, Georg**
  **85604 Zorneding (DE)**
- **ZIEGLER, Christian**
  **80636 München (DE)**
- **STEGEMANN, Robert**
  **81543 München (DE)**
- **AENGENHEISTER, Jens**
  **882049 Pullach (DE)**
- **FEIGL, Jürgen**
  **882049 Pullach (DE)**
- **WELLENHOFER, Anton**
  **82069 Hohenschäftlarn (DE)**
- **DELHOMME-NEUDECKER, Dr. Clara**
  **81825 München (DE)**
- **SHUSTOV, Andrey**
  **67059 Ludwigshafen am Rhein (DE)**
- **JENNE, Eric**
  **67454 Hassloch (DE)**
- **KOCHENDÖRFER, Kiara Aenne**
  **68159 Mannheim (DE)**
- **LAIB, Dr. Heinrich**
  **67117 Limburgerhof (DE)**
- **KÜHN, Heinz-Jürgen**
  **67593 Westhofen (DE)**
- **JACOB, Reiner**
  **67691 Hochspeyer (DE)**

(74) Vertreter: **Reuß, Stephanie**
**Linde GmbH**
**Intellectual Property EMEA**
**Dr.-Carl-von-Linde-Straße 6-14**
**82049 Pullach (DE)**

(56) Entgegenhaltungen:
**WO-A1-2004/091773  WO-A1-2019/228798**

## Beschreibung

Die Erfindung betrifft einen Reaktor und ein Verfahren zur Durchführung einer chemischen Reaktion gemäß den Oberbegriffen der unabhängigen Patentansprüche.

Stand der Technik

In einer Reihe von Verfahren in der chemischen Industrie werden Reaktoren eingesetzt, in denen ein oder mehrere Reaktanden durch beheizte Reaktionsrohre geführt und dort katalytisch oder nichtkatalytisch umgesetzt werden. Die Beheizung dient dabei insbesondere dazu, die benötigte Aktivierungsenergie für die ablaufende chemische Reaktion zu überwinden. Die Reaktion kann insgesamt endotherm oder, nach Überwindung der Aktivierungsenergie, exotherm ablaufen. Die vorliegende Erfindung betrifft insbesondere stark endotherme Reaktionen.

Beispiele für solche Verfahren sind das Steamcracken (Dampfspalten), unterschiedliche Reformierungsverfahren, insbesondere die Dampfreformierung, die Trockenreformierung (Kohlendioxidreformierung), gemischte Reformierungsverfahren, Verfahren zur Dehydrierung von Alkanen und dergleichen. Beim Steamcracken werden die Reaktionsrohre dabei in Form von Rohrschlangen (engl. Coils), die im Reaktor zumindest einen Umkehrbogen aufweisen, durch den Reaktor geführt, wohingegen bei der Dampfreformierung typischerweise ohne Umkehrbogen durch den Reaktor verlaufende Rohre verwendet werden.

Die Erfindung eignet sich für alle derartigen Verfahren und Ausgestaltungen von Reaktionsohren. Rein illustrativ wird hier auf die Artikel "Ethylene", "Gas Production" und "Propene" in Ullmann's Encyclopedia of Industrial Chemistry, beispielsweise die Publikationen vom 15 April 2009, DOI: 10.1002/14356007.a10_045.pub2, vom 15. Dezember 2006, DOI: 10.1002/14356007.a12_169.pub2, und vom 15. Juni 2000, DOI: 10.1002/14356007.a22_211, verwiesen.

Die Reaktionsrohre von entsprechenden Reaktoren werden herkömmlicherweise durch Verwendung von Brennern beheizt. Die Reaktionsrohre werden dabei durch eine Brennkammer geführt, in der auch die Brenner angeordnet sind.

Wie beispielsweise in der DE 10 2015 004 121 A1 (zugleich EP 3 075 704 A1) beschrieben, steigt gegenwärtig jedoch beispielsweise die Nachfrage nach Synthesegas und Wasserstoff, die ohne oder mit reduzierten lokalen Kohlendioxidemissionen hergestellt werden. Diese Nachfrage kann aber durch Verfahren, in denen befeuerte Reaktoren eingesetzt werden, aufgrund der Verfeuerung typischerweise fossiler Energieträger nicht bedient werden. Andere Verfahren scheiden beispielsweise aufgrund hoher Kosten aus. Entsprechendes gilt für die Bereitstellung von Olefinen und/oder anderer Kohlenwasserstoffe durch Steamcracken oder Dehydrierung von Alkanen. Auch in solchen Fällen besteht der Wunsch nach Verfahren, die vor Ort geringere Mengen an Kohlendioxid emittieren.

Vor diesem Hintergrund wird in der erwähnten DE 10 2015 004 121 A1 eine elektrische Beheizung eines Reaktors zur Dampfreformierung zusätzlich zu einer Befeuerung vorgeschlagen. Hierbei wird bzw. werden eine oder mehrere Spannungsquellen verwendet, die eine Dreiphasenwechselspannung an drei Außenleitern bereitstellt bzw. bereitstellen. Jeder Außenleiter wird an einem Reaktionsrohr angeschlossen. Es wird eine Sternschaltung gebildet, bei der ein Sternpunkt durch einen Sammler realisiert wird, in den die Rohrleitungen einmünden, und mit dem die Reaktionsrohre leitend verbunden sind. Auf diese Weise bleibt der Sammler idealerweise potentialfrei. Der Sammler ist bezogen auf die Vertikale unterhalb sowie außerhalb der Brennkammer angeordnet und erstreckt sich bevorzugt quer zu den Reaktorrohren bzw. entlang der Horizontalen. Die WO 2015/197181 A1 offenbart ebenfalls einen Reaktor, dessen Reaktionsrohre in Sternpunktschaltung angeordnet sind.

Neben der direkten Beheizung von Reaktionsrohren, bei der ein elektrischer Strom durch die Reaktionsrohre fließt, existieren auch unterschiedlichste Konzepte für die indirekte elektrische Beheizung von Reaktionsrohren. Die indirekte elektrische Beheizung kann, wie unter anderem in der WO 2020/002326 A1 beschrieben, in Form einer externen elektrischen Beheizung erfolgen. Auch eine interne Beheizung ist möglich, wie beispielsweise in der WO 2019/228798 A1 offenbart. Neben einer Widerstands- bzw. Impedanzheizung kann eine induktive elektrische Beheizung des von Reaktionsrohren oder einer Katalysatorschüttung, wie in der WO 2017/072057 A1 beschrieben, erfolgen. Die induktive Beheizung kann beispielsweise ein internes oder externes Heizelement oder die Reaktionsrohre selbst erwärmen. Eine direkte (nicht induktive) Beheizung eines Reaktionsrohrs ist auch in der DE 10 2015 004 121 A1 offenbart. Zur Beheizung sind grundsätzliche Konzepte mit mehrphasigem oder einphasigem Wechselstrom oder mit Gleichstrom realisierbar. Bei der direkten Beheizung von Reaktoren mittels Gleichstrom oder auch mit einphasigem Wechselstrom kann keine Sternschaltung mit einem potentialfreien Sternpunkt realisiert werden, die Stromeinspeisung ist jedoch grundsätzlich in ähnlicher Weise realisierbar wie bei mehrphasigem Gleichstrom. Die vorliegende Erfindung eignet sich für alle Varianten der elektrischen Beheizung.

In der WO 2004/091773 A1 ist ein elektrisch beheizter Reaktor zur Durchführung von Gasreaktionen bei hoher Temperatur beschrieben. Der Reaktor besteht aus einem Reaktorblock, aus einem oder mehreren monolithischen Modulen aus einem für eine elektrische Beheizung geeigneten Material, die von einem Gehäuse umgeben sind, aus Kanälen, die sich durch das/die Modul(e) erstrecken und als Reaktionskanäle ausgebildet sind, und aus einer Einrichtung zum Durchleiten oder Induzieren eines Stroms in dem Reaktorblock. Die Sicherheit beim Betrieb eines solchen Reaktors soll dadurch erhöht werden, dass das Gehäuse des Reaktorblocks einen doppelwandigen Mantel aufweist, der diesen gasdicht abschließt, und mindestens eine Vorrichtung zum Einspeisen eines Inertgases in den doppelwandigen Mantel umfasst.

Wie auch nachfolgend erläutert, sind bei elektrisch beheizten Reaktoren besondere sicherheitsrelevante Aspekte zu beachten. Die vorliegende Erfindung stellt sich die Aufgabe, Maßnahmen anzugeben, die diese Aspekte berücksichtigen und auf diese Weise einen vorteilhaften Betrieb eines elektrisch beheizten Reaktors erlauben.

Offenbarung der Erfindung

Vor diesem Hintergrund schlägt die vorliegende Erfindung einen Reaktor und ein Verfahren zur Durchführung einer chemischen Reaktion gemäß den Oberbegriffen der unabhängigen Patentansprüche vor. Ausgestaltungen sind jeweils Gegenstand der abhängigen Patentansprüche sowie der nachfolgenden Beschreibung.

In einem elektrifizierten Ofenkonzept (der Begriff "Ofen" wird üblicherweise zur Bezeichnung eines entsprechenden Reaktors bzw. zumindest von dessen thermisch isoliertem Reaktionsraum verstanden), das der vorliegenden Erfindung zugrunde liegt, werden beispielsweise Reaktionsrohre bzw. entsprechende Rohrstrecken hiervon (nachfolgend auch kurz als "Rohre" bezeichnet) selbst als elektrische Widerstände benutzt, um Wärme zu erzeugen. Dieser direkte Ansatz hat den Vorteil eines höheren Wirkungsgrads im Vergleich zu einer indirekten Erwärmung durch externe elektrische Heizkörper sowie einer höheren erreichbaren Wärmestromdichte. Es ist aber, wie zuvor erwähnt, auch möglich, im Rahmen der vorliegenden Erfindung irgendeine andere Art der elektrischen Beheizung (direkt oder indirekt, als Widerstands-, Impedanz- oder Induktionsheizung, mittels ein- oder mehrphasigem Wechselstrom oder mit Gleichstrom) durchzuführen, wenn sich diese als vorteilhaft herausstellt.

Die Stromeinspeisung kann im Falle der Beheizung mit mehrphasigem Wechselstrom in die direkt beheizten Reaktionsrohre über M separat angeschlossene Phasen erfolgen. Die stromleitenden Reaktionsrohre, die mit den M Phasen verbunden sind, können an einen Sternpunkt am anderen Ende ebenfalls elektrisch verbunden werden. Die Phasenzahl M beträgt insbesondere 3, entsprechend der Phasenzahl üblicher Drehstromquellen bzw. -netze. Grundsätzlich ist die vorliegende Erfindung aber nicht auf die Verwendung von drei Phasen beschränkt, sondern kann auch mit einer größeren Phasenzahl, beispielsweise einer Phasenzahl von 4, 5, 6, 7 oder 8, verwendet werden. Ein Phasenversatz beträgt dabei insbesondere 360°/M, d.h. bei einem dreiphasigen Drehstrom 120°.

Durch die Sternschaltung am Sternpunkt wird in einer elektrischen Beheizung mit mehrphasigem Wechselstrom ein Potentialausgleich zwischen den Phasen erreicht, was eine elektrische Isolierung der angeschlossenen Rohrleitungen idealerweise überflüssig macht. Dies stellt einen besonderen Vorteil eines derartigen Ofenkonzepts dar, da eine Unterbrechung der metallischen Reaktionsrohre zur Isolierung bestimmter Abschnitte insbesondere aufgrund der verwendeten hohen Temperaturen und des damit erforderlichen hohen Material- und Konstruktionsaufwands unerwünscht ist.

Die nachfolgend erläuterten, erfindungsgemäß vorgeschlagenen Maßnahmen eignen sich jedoch in gleicher Weise für die Verwendung von einphasigem Wechselstrom und Gleichstrom und die vorliegende Erfindung kann sowohl in wechselstrom- als auch in gleichstrombeheizten Reaktoren oder auch in entsprechenden Mischformen zum Einsatz kommen. Wie erwähnt, eignet sich die vorliegende Erfindung auch zum Einsatz bei indirekt beheizten Reaktionsrohren. Bei einer Gleichstromanordnung ist beispielsweise gegenüber einer Wechselstromanordnung lediglich die Art der Stromquelle und der der Stromeinspeisung entgegengesetzte Bereich der Reaktionsrohre oder entsprechender strombeaufschlagter Abschnitte unterschiedlich. In letzterem wird eine elektrische Verbindung unterschiedlicher Rohrstrecken nur optional durchgeführt. Da in einer Gleichstromanordnung kein potentialfreier Sternpunkt vorliegt, sind geeignete Stromabfuhrelemente bereitzustellen, die den Stromfluss wieder sicher nach außen führen. Letztere können analog zu den nachfolgend noch beschriebenen Stromeinspeisungen ausgeführt werden.

Die vorliegende Erfindung betrifft die Absicherung von elektrisch beheizten Reaktoren der erläuterten Art, die insbesondere für den Fall einer Beschädigung der Reaktionsrohre ("Coilreißer") erforderlich ist. Bei entsprechenden Beschädigungen können ein oder mehrere Reaktionsrohre insbesondere vollständig durchtrennt werden; die vorliegende Erfindung ist jedoch auch für Leckagen in geringerem Umfang vorteilhaft. Bei entsprechenden Beschädigungen kommt es zu einem schlagartigen oder schleichenden Austritt von brennbarem Gas in den aus Gründen der thermischen Isolierung weitgehend abgeschlossenen Reaktorbehälter.

Derartige Beschädigungen sind in herkömmlichen, befeuerten Reaktoren ein geringeres sicherheitstechnisches Problem als in rein elektrisch beheizten Reaktoren, wie sie erfindungsgemäß insbesondere eingesetzt werden, da in befeuerten Reaktoren aus den Reaktionsrohren austretende brennbare Gase, beispielsweise in Form eines Kohlenwasserstoff-Dampf-Gemischs, durch die im Reaktorbehälter bzw. einer entsprechenden Brennkammer stattfindende Verbrennung sofort und kontinuierlich umgesetzt werden können, bzw. da durch die stattfindende Verbrennung ein deutlich reduzierter Sauerstoffgehalt vorliegt und damit der die Reaktionsrohre umgebende Gasraum bereits im Wesentlichen "inertisiert" ist. Dagegen könnten sich entsprechende brennbare Gase bei einer rein elektrischen Beheizung im Reaktorbehälter anreichern und dort bei dem normalen Sauerstoffgehalt der Luft und Temperaturen oberhalb der Selbstzündungstemperatur beispielsweise die Explosions- oder Detonationsgrenze erreichen. Auch bei einer Verbrennung ohne Explosion oder Detonation kommt es durch eine vollständige oder unvollständige Verbrennung zu einem Energieeintrag und damit ggf. zu einer Überhitzung. Die vollständige oder unvollständige Verbrennung kann zusammen mit dem aus den Reaktionsrohren ausströmenden Gasvolumen an sich insbesondere zu einer deutlichen Druckerhöhung führen. Die vorliegende Erfindung vermindert eine derartige Druckerhöhung, weil der Abbrand des Gasgemischs verhindert wird.

Im Sprachgebrauch der Patentansprüche betrifft die vorliegende Erfindung dabei einen Reaktor zur Durchführung einer chemischen Reaktion, der einen Reaktorbehälter (d.h. einen thermisch isolierten oder zumindest teilweise isolierten Bereich), ein oder mehrere Reaktionsrohre und Mittel zur elektrischen Beheizung des einen oder der mehreren Reaktionsrohre aufweist. Der erfindungsgemäß vorgeschlagene Reaktor ist insbesondere zur Durchführung einer chemischen Reaktion auf einem im weiteren Verlauf für Hochtemperaturreaktionen erläuterten Temperaturniveau eingerichtet. Die Reaktionsrohre sind dabei mit wenigstens einem Umkehrbogen durch den Reaktor geführt oder verlaufen ohne Umkehrbogen durch den Reaktor. Die Mittel zur elektrischen Beheizung können wie zuvor umfangreich erläutert ausgebildet sein. Es kann sich einerseits um Mittel zur Stromeinspeisung in das eine oder die mehreren Reaktionsrohre handeln, die einen Stromfluss in dem einen oder den mehreren Reaktionsrohren und eine entsprechende Erwärmung bewirken, beispielsweise starre, in den Reaktor geführte Stromstäbe, aber auch um Mittel zur indirekten Beheizung wie Widerstands- und/oder induktive Heizeinrichtungen, die Wärme konduktiv und/oder durch Wärmestrahlung auf das eine oder die mehreren Reaktionsrohre übertragen oder die in dem einen oder mehreren Reaktionsrohren oder einer Katalysatorschüttung beispielsweise Wirbelströme erzeugen und auf diese Weise eine Erwärmung bewirken.

Im Rahmen der vorliegenden Erfindung weist der Reaktorbehälter eine oder mehrere, dauerhaft geöffnete oder zur Öffnung oberhalb eines vorgegebenen Druckniveaus eingerichtete Ausströmöffnungen auf, und es sind Gaseinspeisemittel bereitgestellt, die dafür eingerichtet sind, in einen Innenraum des Reaktorbehälters ein Inertisierungsgas einzuspeisen.

Nachfolgend wird überwiegend ein Reaktor beschrieben, der erfindungsgemäß bzw. gemäß unterschiedlichen Ausführungsformen der Erfindung ausgebildet ist. Die entsprechenden Erläuterungen gelten jeweils auch für ein entsprechendes Verfahren, bei dem die entsprechend eingerichteten Mittel jeweils die angegebenen Verfahrensschritte durchführen.

Zur Einspeisung des Inertisierungsgases umfassen die Gaseinspeisemittel beispielsweise Einspeisedüsen oder -Öffnungen, die in den Reaktorbehälter münden sowie Leitungen und ein damit verbundenes Gasreservoir, wodurch der Innenraum des Reaktorbehälters mit dem Inertisierungsgas beaufschlagt werden kann. Der Reaktorbehälter ist insbesondere eine überwiegend, d.h. zu mindestens 90, 95 oder 99% von einer thermisch isolierenden Wand umgebene Kammer. Der Innenraum des Reaktorbehälters ist der Bereich, in dem die Reaktionsrohre angeordnet sind, und der von der Reaktorwand umgeben ist. Eine Reaktorwand, die beispielsweise auch doppelwandig ausgebildet sein kann, zählt nicht zum Innenraum.

Bei dem Inertisierungsgas kann es sich in allen Ausgestaltungen der vorliegenden Erfindung um ein Gas oder ein Gasgemisch handeln, das Stickstoff, Kohlendioxid und/oder Argon in einem jeweils überatmosphärischen Gehalt aufweist, bzw. sind die Gaseinspeisemittel zur Bereitstellung eines entsprechenden Inertisierungsgases eingerichtet, beispielsweise indem sie entsprechendes Inertisierungsgas vorhalten oder durch Mischung von Reingasen oder Zumischung von Reingasen zu Luft bereitstellen. Insbesondere kann der Gehalt an einem nicht brennbaren Gas bei mehr als 50%, 60%, 70%, 80% oder 90% liegen. Es muss sich bei einem Inertisierungsgas also nicht um ein reines "Inertgas" im klassisch verstandenen Sinne handeln; vielmehr reicht aus, wenn das Inertisierungsgas, insbesondere durch seinen Gehalt an einem nicht brennbaren Gas, den zündfähigen Mischungsbereich zumindest teilweise verringert, also die Gefahr einer Entzündung, Explosion oder Detonation reduziert. Ein Inertisierungsgas zur Verwendung im Rahmen der vorliegenden Erfindung kann insbesondere einen unteratmosphärischen Sauerstoffgehalt, beispielsweise einen Sauerstoffgehalt von weniger als 10%, 5%, 1%, 0,5% oder 0,1% aufweisen. Ein Inertisierungsgas kann insbesondere auch (vollständig oder im Wesentlichen) sauerstofffrei sein.

Die vorliegende Erfindung schafft durch die vorgeschlagenen Maßnahmen ein Containment mit konditionierter Atmosphäre, das für die thermische Isolierung und für die sicherheitstechnische Absicherung von Hochtemperaturreaktoren dient, bei denen der Energieeintrag elektrisch erfolgt. Im Rahmen der vorliegenden Erfindung kann insbesondere eine vollständig elektrische Beheizung vorgesehen sein, d.h. die Beheizung der Reaktionsrohre erfolgt zumindest innerhalb des Reaktorbehälters vorteilhafterweise überwiegend oder ausschließlich durch thermische Beheizung, d.h. wenigstens 90, 95 oder 99% der hier eingebrachten Wärmemenge, insbesondere der gesamten hier eingebrachten Wärmemenge, erfolgt durch elektrische Heizmittel. Ein Wärmeeintrag über ein durch das eine oder die mehreren Reaktionsrohre geführtes Gasgemisch bleibt hier unberücksichtigt, so dass sich dieser Anteil insbesondere auf die innerhalb des Reaktorbehälters von außen auf die Wand des einen oder der mehreren Reaktionsrohre übertragene oder innerhalb des Reaktorbehälters in der Wand oder einer Katalysatorschüttung erzeugte Wärme bezieht.

In seiner allgemeinsten Form beschreibt die Erfindung also ein Containment für mit Kohlenwasserstoffen beaufschlagte Hochtemperaturreaktoren (wobei eine Hochtemperaturreaktion hier insbesondere eine Reaktion bezeichnen soll, die auf einer Temperatur von mehr als 500 °C und insbesondere von 700 bis 1.000 °C abläuft) mit elektrischer Beheizung, das 1. in der Umgebung der Rohre eine inertisierte Atmosphäre bereitstellt, und 2. nicht dauerhaft fest verschlossen ist. Besonders bevorzugt ist die Anwendung für elektrisch beheizte Reaktoren, bei denen die Prozessgastemperatur nahe oder oberhalb der Selbstentzündungstemperatur der im Prozessgas enthaltenen Kohlenwasserstoffe liegt. Mit dem Begriff "Prozessgas" wird ein Gas oder Gasgemisch bezeichnet, das durch das eine oder die mehreren Reaktionsrohre strömt.

Ausführungsformen der vorliegenden Erfindung unterscheiden sich insbesondere durch die Ausgestaltung der einen oder der mehreren, dauerhaft geöffneten oder zur Öffnung oberhalb eines vorgegebenen Druckniveaus eingerichteten Ausströmöffnungen. Auch eine Kombination entsprechend ausgestalteter Ausströmöffnungen ist jedoch grundsätzlich möglich.

In einer nachfolgend als "erste Gruppe" bezeichneten Gruppe von Ausführungsformen ist oder sind die eine oder die mehreren Ausströmöffnungen dauerhaft geöffnet. Hiermit ist gemeint, dass die eine oder die mehreren Ausströmöffnungen dem Aus- oder Einströmen von Fluid in den bzw. aus dem Reaktorbehälter bis auf die ggf. vorhandene Verengung des Strömungsquerschnitts keinerlei mechanischen Widerstand entgegensetzt bzw. entgegensetzen. Die eine oder die mehreren Öffnungen ist bzw. sind also unverschlossen.

In einer nachfolgend als "zweite Gruppe" bezeichneten Gruppe von Ausführungsformen ist oder sind die eine oder die mehreren Ausströmöffnungen dagegen für die Öffnung oberhalb des vorgegebenen Druckniveaus eingerichtet. Die eine oder die mehreren Ausströmöffnungen ist oder sind dabei unterhalb des vorgegebenen Druckniveaus verschlossen und ist oder sind für eine zeitweise oder dauerhafte Öffnung bei Erreichen des vorgegebenen Druckniveaus eingerichtet. Mit einer "dauerhaften" Öffnung wird dabei insbesondere eine irreversible Öffnung verstanden, so dass in dieser Ausgestaltung kein Wiederverschluss nach anschließender Unterschreitung des vorgegebenen Druckniveaus durch Ablassen von Gas erfolgt. Bei einer "zeitweisen" Öffnung erfolgt dagegen ein Wiederverschluss.

Die eine oder die mehreren Ausströmöffnungen können zur Öffnung bei dem vorbestimmten Druckniveau beispielsweise eine oder mehrere feder- oder lastbeaufschlagte Klappen aufweisen, die einen durch die Feder- oder Lastkennwerte definierten Öffnungswiderstand aufweisen und sich daher erst ab einem entsprechenden Druck öffnen. In einer Ausgestaltung der zweiten Gruppe von Ausgestaltungen kann bzw. können auch eine oder mehrere Berstscheiben oder Überdruckventile an sich bekannter Art eingesetzt werden. Es ist auch möglich, einen Druckwert, beispielsweise sensorisch zu erfassen und bei Überschreiten eines vorgegebenen Schwellwerts einen Öffnungsmechanismus beliebiger Art, beispielsweise einen Zündmechanismus oder einen elektroaktorischen Antrieb, auszulösen. Dies ermöglicht es, im Bedarfsfall innerhalb einer kurzen Ansprechzeit einen ausreichend großen Querschnitt freizugeben, der im Normalbetrieb in der erläuterten Weise verschlossen gehalten wird.

Insbesondere in der ersten Gruppe von Ausführungsformen, ggf. aber auch in der zweiten Gruppe von Ausgestaltungen kann der Reaktor für eine konstante Spülung mit Inertgas eingerichtet sein. Mit anderen Worten sind die erläuterten Gaseinspeisemittel dabei für eine kontinuierliche Einspeisung des Inertisierungsgases in den Reaktorbehälter eingerichtet. Das Inertisierungsgas kann dabei in der ersten Gruppe von Ausführungsformen insbesondere vorwiegend über die eine oder die mehreren dauerhaft geöffneten Ausströmöffnungen ausströmen, ggf. aber auch über weitere Ausströmöffnungen, insbesondere unvermeidbare oder gezielt geschaffene Gaslecks oder Bypässe, beispielsweise zu einem vorhandenen Kamin. In der zweiten Gruppe von Ausführungsformen, in der die eine oder die mehreren dauerhaft geöffneten Ausströmöffnungen im Normalfall verschlossen ist oder sind, sind für das Ausströmen des Inertisierungsgases entweder weitere Öffnungen vorgesehen, beispielsweise Bypassleitungen zu einem Kamin, oder unvermeidlich vorhanden, beispielsweise aufgrund von Undichtigkeiten des Reaktorbehälters.

Alternativ zur konstanten Spülung kann jedoch auch vorgesehen sein, den Reaktor nur einmalig oder periodisch entsprechend einem oder mehrerer vorbestimmter Kriterien mit dem Inertisierungsgas zu beaufschlagen. Die Gaseinspeisemittel sind dann für einen derartigen Betrieb eingerichtet. Ein oder mehrere vorbestimmte Kriterien können beispielsweise ein Erreichen eines vorgegebenen Druckwerts und/oder einer vorgegebenen Konzentration, beispielsweise eines minimalen und tolerierbaren Sauerstoffgehalts, umfassen. Ein Kriterium kann aber auch sein, dass der Reaktorbehälter erstmalig in Betrieb genommen wird. Es kann insbesondere eine kontinuierliche Messung vorgenommen werden und die Einspeisung von Inertisierungsgas kann immer dann eingeleitet werden, wenn entsprechende Messwerte angeben, dass die vorgegebenen Kriterien nicht mehr erfüllt sind. Die einmalige oder periodische Beaufschlagung mit Inertisierungsgas kann insbesondere in der zweiten Gruppe von Ausführungsformen, unterhalb des Druckwerts für die Öffnung der einen oder der mehreren Ausströmöffnungen vorgesehen sein, da hier ein freies Abströmen des Inertisierungsgases verhindert und das Inertisierungsgas über längere Zeiträume in dem Reaktorbehälter gehalten werden kann.

In einer besonders bevorzugten Ausgestaltung der ersten Gruppe von Ausführungsformen ist der Reaktor für einen Betrieb des Reaktorbehälters auf einem unteratmosphärischen Druckniveau eingerichtet. Hierbei sind Mittel zur Bildung einer Gasströmung aus dem Reaktor bereitgestellt. In diesem Zusammenhang kann oder können die eine oder die mehreren Ausströmöffnungen, die ja in dieser Gruppe von Ausführungsformen dauerhaft geöffnet ist bzw. sind, mit einem Kamin, der eine Kaminmündung in ausreichender Höhe aufweist, dauerhaft offen verbunden sein. Hierbei ergibt sich, aufgrund der hohen Temperaturen im Reaktorbehälter und der daraus resultierenden geringeren Dichte des enthaltenen Gasvolumens, ein statischer Unterdruck im Reaktorbehälter. Auch eine Verwendung von Gebläsen, beispielsweise bis zur Ausbildung eines entsprechenden statischen Unterdrucks, kann in diesem Zusammenhang vorgesehen sein.

In einer besonders bevorzugten Ausgestaltung der zweiten Gruppe von Ausführungsformen ist der Reaktor dagegen für einen Betrieb des Reaktorbehälters auf einem überatmosphärischen Druckniveau eingerichtet. Dies kann insbesondere dadurch erreicht werden, dass das Inertisierungsgas bis zu einem überatmosphärischen Druckniveau eingespeist wird, das unterhalb eines Öffnungsdrucks der Ausströmöffnungen liegt.

Das bis zu einem gewissen Grad inertisierte und zur Umgebung "offene" System gemäß der ersten Gruppe an Ausführungsformen (insbesondere mit leichtem Unterdruck im Reaktorbehälter infolge des Kamineffekts) oder auch das "öffenbare" System gemäß der zweiten Gruppe von Ausführungsformen der vorliegenden Erfindung (das insbesondere mit einem gewissen Überdruck im Reaktorbehälter betrieben werden kann) kann die Drucksteigerungsrate im Fall eines Austritts von Kohlenwasserstoffen Beschädigung der Reaktionsrohre, auf ein tolerables und die Auslegungsgrenzen des Reaktorbehälters nicht verletzendes Maß begrenzen.

Durch das Konzept eines mit Inertisierungsgas beaufschlagen Reaktorbehälters kann der dort vorliegende Sauerstoffgehalt reduziert werden. Die Umsetzungsrate der im Beschädigungsfall austretenden Kohlenwasserstoffe und damit die maßgebliche zusätzliche Volumenzunahme (in Folge des Reaktionswärmeeintrags) skaliert in erster Näherung mit dem Sauerstoffpartialdruck bzw. dem molaren Sauerstoffgehalt in der Box.

In beiden Gruppen von Ausführungsformen der vorliegenden Erfindung müssen durch die Einspeisung des Inertisierungsgases die Wände des Reaktorbehälters vorteilhafterweise nicht vollständig gasdicht ausgeführt werden, was aufgrund der hohen Temperaturen an bestimmten Stellen aufgrund einer erforderlichen Bewegungsmöglichkeit nur mit sehr hohem Materialaufwand, beispielsweise die Verwendung temperaturbeständiger Balgenstrukturen und dergleichen, durchzuführen wäre. Bei einem Betrieb auf unteratmosphärischen Druckniveau in Verbindung mit einem Kamin kann zwar ggf. über entsprechende Undichtigkeiten Luft in den Reaktorbehälter eingesaugt werden, diese wird jedoch durch die kontinuierliche, durch den Kamin bewirkte Strömung entsprechend abgeführt und verdünnt. Sicherheitsprobleme bei der Verwendung evtl. die Atmung behindernder Inertisierungsgase oder Komponenten hiervon können auf diese Weise verhindert werden. Bei einem Betrieb auf einem überatmosphärischen Druckniveau kann hingegen aufgrund der gleichmäßigen Druckausbreitung eine Einströmung von Luft in den Reaktorbehälter sicher verhindert werden. Über Lecks austretendes Inertisierungsgas kann beispielsweise durch eine ausreichende Belüftung außerhalb des Reaktorbehälters abgeführt bzw. verdünnt werden.

Durch das vorgeschlagene Konzept des mit Inertisierungsgas beaufschlagten Reaktorbehälters kann der Sauerstoffgehalt hier reduziert werden. Wie erfindungsgemäß ausgenutzt werden kann, korreliert dabei die Umsetzungsrate der austretenden Kohlenwasserstoffe und damit die maßgebliche zusätzliche Volumenzunahmerate (in Folge des Reaktionswärmeeintrags) in erster Näherung mit dem Sauerstoffpartialdruck bzw. dem Sauerstoffmolenanteil. Diese Korrelation ist in der nachfolgenden Tabelle 1 zusammengefasst, wobei mit $xO_2$ der molaren Sauerstoffgehalt und mit $V_{reak}$ die reaktionsbedingte Volumenzunahmerate bezeichnet sind.

Die Gaseinspeisemittel sind daher vorteilhafterweise dafür eingerichtet, einen Maximalsauerstoffgehalt in dem Reaktionsbehälter auf Grundlage einer Dimensionierung des oder der Kamine einzustellen.

Tabelle 1

| $xO_2$ [vol.%] | $V_{reak}$ [m³/s] |
|---|---|
| 21 | 218 |
| 15 | 156 |
| 10 | 104 |
| 5 | 52 |
| 3 | 31 |
| 1 | 10 |
| 0,1 (fast inert) | 1 |

Der maximal zulässige Druck $p_{max}$ folgt aus der mechanischen Stabilität der jeweiligen Kammern bzw. eines umgebenden Containments. Dieser muss zumindest so groß sein, wie der Druck $p_{box}$ bei einem Coilreißer oder bei einem entsprechenden anderen sicherheitsrelevanten Ereignis, welcher wiederum vom Volumen $V_{Box}$ der beteiligten Kammern, dem Kamindurchmesser $D_{Kamin}$ und dem molaren Sauerstoffgehalt abhängt:

$$p_{max} \geq p_{box} = f\,(V_{Box},\ D_{Kamin},\ xO_2)$$

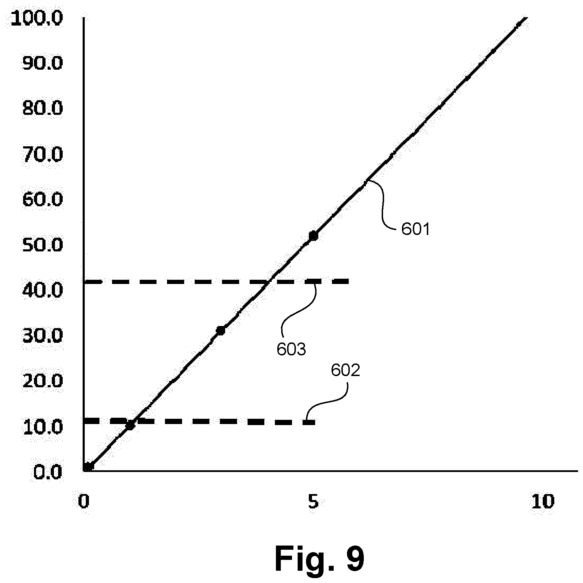

Aus dieser Forderung ergibt sich eine Designgrundlage für die Dimensionierung des Kamins, also der über die eine oder die mehreren Ausströmöffnungen dauerhaft oder temporär vorhandenen Verbindung zur Umgebung und umgekehrt. Diese Beziehung wird nun anhand der Figur 9 nochmals erläutert. Legt man hier beispielsweise einen maximal zulässigen Druckanstieg von 20 mbar zugrunde, wie mit den gestrichelten Linien 601 und 602 veranschaulicht, darf sich, um einen Kamin mit 500 mm Durchmesser (gestrichelte Linie 601) verwenden zu können, eine reaktionsbedingte Volumenzunahmerate von maximal ca. 10 m$^3$/s ergeben, was zu einem maximalen Sauerstoffgehalt von ca. 1% führt, der durch die Inertisierung eingestellt wird. Umgekehrt muss man, wenn man eine Inertisierung auf einen Sauerstoffgehalt von maximal 1% durchführen will, also einen Kamindurchmesser von mindestens 500 mm verwenden. Um einen Kamin mit 900 mm Durchmesser (gestrichelte Linie 602) verwenden zu können, darf sich nur eine Volumenzunahmerate von ca. 42 m$^3$/s ergeben, was zu einem maximalen Sauerstoffgehalt von ca. 4 % führt, der durch die Inertisierung eingestellt wird. Umgekehrt und analog zu den Erläuterungen oben muss hier, wenn eine Inertisierung auf einen Sauerstoffgehalt von maximal 4% erfolgen soll, ein Kamindurchmesser von mindestens 900 mm verwendet werden.

Je kleiner der Sauerstoffgehalt in dem Reaktorbehälter, desto geringer ist also die Volumenzunahme. Demzufolge kann auch der Durchmesser des Notkamins kleiner sein, der das zusätzliche Volumen abführen muss. Entscheidend für eine effiziente Begrenzung des Sauerstoffgehalts ist dabei stets eine hinreichend gute Abdichtung gegenüber der Umgebung, um den Eintrag von sauerstoffhaltiger Falschluft so weit wie möglich bzw. in ausreichender Weise zu verhindern. Wie erläutert, ist dabei jedoch keine vollständige Abdichtung erforderlich.

Mit anderen Worten wird im Rahmen der vorliegenden Erfindung also mittels des Inertisierungsgases ein Maximalsauerstoffgehalt in dem Reaktionsbehälter eingestellt, der in der ersten Gruppe von Ausgestaltungen bei Vorhandensein eines Kamins auf Grundlage einer Dimensionierung des oder der Kamine ausgewählt wird, bzw. sind die Gaseinspeisemittel für eine Einspeisung von Inertisierungsgas bzw. für eine Einstellung des Sauerstoffgehaltes auf dieser Grundlage eingerichtet. Die Gaseinspeisemittel können auch insbesondere dafür eingerichtet sein, eine Einspeisung derart vorzunehmen, dass ein Zieldruck nicht überschritten wird. In der zweiten Gruppe von Ausführungsformen kann ebenfalls eine Einspeisung auf Grundlage einer Sauerstoffkonzentration bzw. eines Zieldrucks und einer Kamindimensionierung erfolgen.

Eine Menge des eingespeisten Inertisierungsgases kann durch entsprechende Regelungsmittel insbesondere auf Grundlage einer Sauerstoffmessung in dem Reaktorbehälter oder in dem Kamin, falls vorhanden, geregelt werden, wodurch der Sauerstoffgehalt im Betrieb konstant gehalten werden kann. Ein entsprechendes Sicherheitskonzept umfasst erfindungsgemäß, dass ein Betrieb des Reaktors unterbunden wird oder bleibt, wenn der gemessene Sauerstoffgehalt einen Sollsauerstoffgehalt überschreitet. Beispielsweise kann eine Einspeisung von Kohlenwasserstoffen in die Reaktionsrohre und/oder deren Beheizung erst bei Unterschreitung eines geforderten Sauerstoffgehalts freigegeben werden. Bei Detektion eines Fehlers kann allgemein Reaktionsbetrieb mit Kohlenwasserstoffzugabe in die Reaktionsrohre unterbunden werden.

Ein unzulässiger Austritt von Gas aus den Reaktionsrohren kann beispielsweise über Druckmesssensoren detektiert werden, wobei eine Einspeisung von Kohlenwasserstoffen in die Reaktionsrohre bei Detektion eines Gasaustritts unterbunden werden kann, um die Gesamtmenge an austretenden Kohlenwasserstoffen zu minimieren.

Zur Detektion sehr kleiner Beschädigungen (Leckströmung ohne drastischen Druckanstieg) kann auch der Kohlenwasserstoffgehalt in dem Reaktorbehälter oder dem Kamin, falls vorhanden (beispielsweise in Form eines Kohlenmonoxidäquivalents), kontinuierlich gemessen werden. Ein unzulässiger Wert kann ebenfalls die Unterbindung der Kohlenwasserstoffeinspeisung zur Folge haben.

Die vorliegende Erfindung umfasst also, allgemeiner gesprochen, dass auf Grundlage einer Druck- und/oder Kohlenwasserstoffmessung ein Wert bestimmt wird, der einen Gasaustritt aus dem einen oder den mehreren Reaktionsrohren kennzeichnet, und dass eine oder mehrere Sicherheitsmaßnahmen eingeleitet wird oder werden, wenn der Wert einen vorgegebenen Schwellwert überschreitet.

Bei dem erfindungsgemäß vorgeschlagenen Verfahren zur Durchführung einer chemischen Reaktion wird ein Reaktor verwendet, der einen Reaktorbehälter, ein oder mehrere Reaktionsrohre und Mittel zur elektrischen Beheizung des einen oder der mehreren Reaktionsrohre aufweist. Erfindungsgemäß wird als der Reaktorbehälter ein Reaktorbehälter verwendet, der eine oder mehrere, dauerhaft geöffnete oder zur Öffnung oberhalb eines vorgegebenen Druckniveaus eingerichtete Ausströmöffnungen aufweist, und unter Verwendung von Gaseinspeisemitteln wird in einen Innenraum des Reaktorbehälters erfindungsgemäß ein Inertisierungsgas eingespeist.

Zu weiteren Merkmalen und Vorteilen eines entsprechenden Verfahrens, bei dem vorteilhafterweise ein Reaktor gemäß einer der zuvor erläuterten Ausgestaltungen der Erfindung verwendet wird, sei auf die obigen Erläuterungen verwiesen.

Die Erfindung wird nachfolgend unter Bezugnahme auf die beigefügten Zeichnungen weiter erläutert, die Ausgestaltungen der vorliegenden Erfindung unter Bezugnahme und im Vergleich zum Stand der Technik veranschaulichen.

Figurenbeschreibung

Figur 1 veranschaulicht schematisch einen Reaktor zur Durchführung einer chemischen Reaktion gemäß einer nicht erfindungsgemäßen Ausgestaltung.

Figuren 2 und 4 bis 8 veranschaulichen schematisch Reaktoren zur Durchführung einer chemischen Reaktion gemäß einer Ausgestaltung der Erfindung.

Figur 3 veranschaulicht einen Reaktor zur Durchführung einer chemischen Reaktion.

Figur 9 veranschaulicht schematisch Grundlagen einer Kamindimensionierung gemäß einer Ausgestaltung der vorliegenden Erfindung.

In den Figuren sind einander baulich oder funktionell entsprechende Elemente mit identischen Bezugszeichen veranschaulicht und werden der Übersichtlichkeit halber nicht wiederholt erläutert. Werden nachfolgend Komponenten von Vorrichtungen erläutert, betreffen die entsprechenden Erläuterungen jeweils auch die damit durchgeführten Verfahren und umgekehrt. Die Figurenbeschreibung nimmt dabei wiederholt auf eine Wechselstrombeheizung Bezug. Wie erwähnt, eignet sich die vorliegende Erfindung aber in gleicher Weise auch zur Verwendung von Gleichstrom zur Beheizung. Auf die obigen Erläuterungen wird dabei verwiesen.

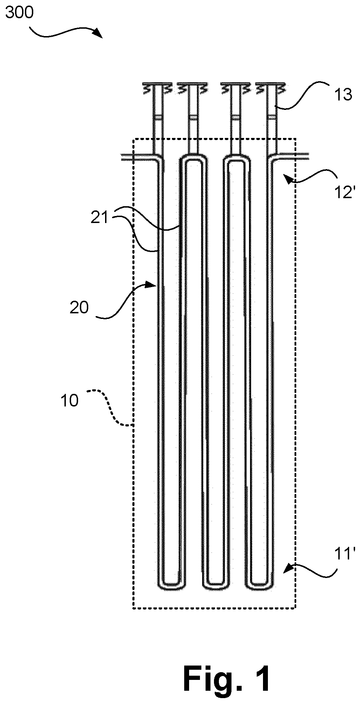

Figur 1 veranschaulicht schematisch einen Reaktor zur Durchführung einer chemischen Reaktion gemäß einer nicht erfindungsgemäßen Ausgestaltung.

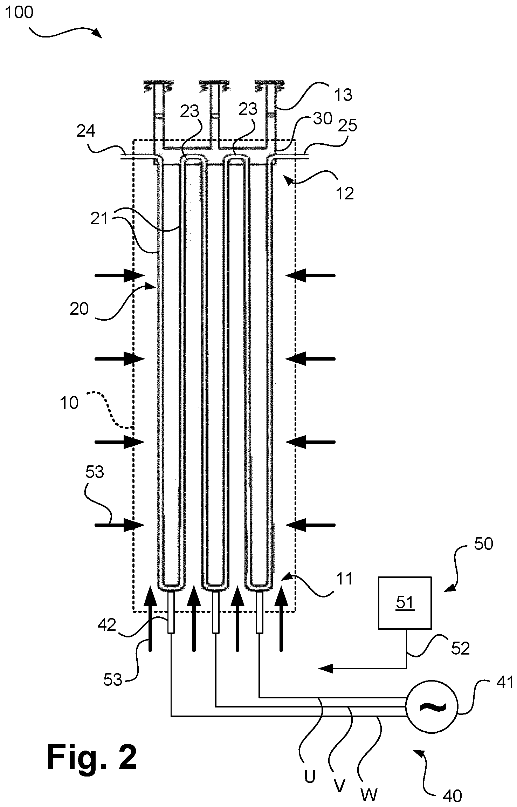

Der hier mit 300 bezeichnete Reaktor ist zur Durchführung einer chemischen Reaktion eingerichtet. Er weist dazu einen insbesondere thermisch isolierten Reaktorbehälter 10 und ein Reaktionsrohr 20 auf, wobei eine Anzahl von Rohrstrecken des Reaktionsrohrs 20, die hier nur in zwei Fällen mit 21 bezeichnet sind, jeweils zwischen einer ersten Zone 11' und einer zweiten Zone 12' in dem Reaktorbehälter 10 verlaufen. An einer Decke des Reaktorbehälters bzw. an einer Stützstruktur ist das Reaktionsrohr 20, das nachfolgend noch in Bezug auf Figur 2 näher erläutert wird, mit geeigneten Aufhängungen 13 befestigt. In einem unteren Bereich kann der Reaktorbehälter insbesondere eine nicht veranschaulichte Feuerung aufweisen. Es versteht sich, dass hier und nachfolgend jeweils mehrere Reaktionsrohre bereitgestellt sein können.

Figur 2 veranschaulicht schematisch einen Reaktor zur Durchführung einer chemischen Reaktion gemäß Ausgestaltung der vorliegenden Erfindung, der insgesamt mit 100 bezeichnet ist.

Die zuvor mit 11' und 12' bezeichneten Zonen sind hier als Bereiche 11 und 12 ausgebildet, wobei die Rohrstrecken 21 zur Beheizung der Rohrstrecken 21 in den ersten Bereichen 11 jeweils über Anschlusselemente 42 elektrisch mit den Phasenanschlüssen U, V, W einer mehrphasigen Wechselstromquelle 41 verbindbar sind, wodurch insgesamt mit 40 bezeichnete Mittel zur elektrischen Beheizung des Reaktionsrohrs 20 gebildet sind. Schalter und dergleichen sowie die spezifische Art der Anbindung sind nicht veranschaulicht. Die Rohrstrecken 21 sind in der hier veranschaulichten Ausgestaltung der Erfindung in den zweiten Bereichen 12 mittels eines Verbindungselements 30, das einstückig mit dem einen oder den mehreren Reaktionsrohren 20 verbunden und innerhalb des Reaktorbehälters 10 angeordnet ist, elektrisch leitend miteinander verbunden. An das Verbindungselement 30 kann auch ein Neutralleiter angebunden sein.

In dem hier veranschaulichten Beispiel wird also eine Sternschaltung mehrerer Wechselstromphasen realisiert. Wie mehrfach erwähnt, kann die Erfindung aber auch unter Verwendung einer einphasigen Wechselstromheizung, einer Gleichstromheizung oder anderer Mittel zur Beheizung, beispielsweise zur induktiven oder indirekten Beheizung im oben erläuterten Sinn, vorgesehen sein.

In dem hier veranschaulichten Reaktor 100 sind damit mehrere Rohrstrecken 21 eines Reaktionsrohrs 20 (wenngleich mehrere solcher Reaktionsrohre 20 bereitgestellt sein können), nebeneinander in dem Reaktorbehälter 10 angeordnet. Die Rohrstrecken 21 gehen über Umkehrbögen 23 (nur teilweise bezeichnet) ineinander über und sind mit einem Einspeiseabschnitt 24 und einem Entnahmeabschnitt 25 verbunden.

Eine erste Gruppe der Umkehrbögen 23 (in der Zeichnung unten) ist nebeneinander in dem ersten Bereich 11 und eine zweite Gruppe der Umkehrbögen 23 (in der Zeichnung oben) ist nebeneinander in dem zweiten Bereich 12 angeordnet. Die Umkehrbögen 23 der zweiten Gruppe sind in dem Verbindungselement 30 ausgebildet und die Rohrstrecken 21 erstrecken sich ausgehend von dem Verbindungselement 30 in dem zweiten Bereich 12 zu dem ersten Bereich 11. Die Stromeinspeiseelemente 52 können beliebig, beispielsweise starr, ausgebildet sein und mit stabförmigen Abschnitten durch eine Wand des Reaktorbehälters 10 treten.

Mittel zur Einspeisung eines Inertisierungsgases in den Reaktorbehälter sind insgesamt mit 50 angegeben. Wie mit Pfeilen 53 (nur teilweise entsprechend bezeichnet) veranschaulicht, wird das Inertisierungsgas insbesondere über Wandöffnungen, Düsen oder dergleichen in einer oder mehreren beliebigen Wänden des Reaktorbehälters 10 in den Reaktorbehälter 10 eingespeist. Zur Bereitstellung und Einspeisung des Inertisierungsgases sind geeignete Gaseinspeisemittel vorgesehen, die hier stark vereinfacht mit veranschaulicht sind, und die beispielsweise einen oder mehrere Gastanks 51 sowie entsprechende Leitungen 52 umfassen.

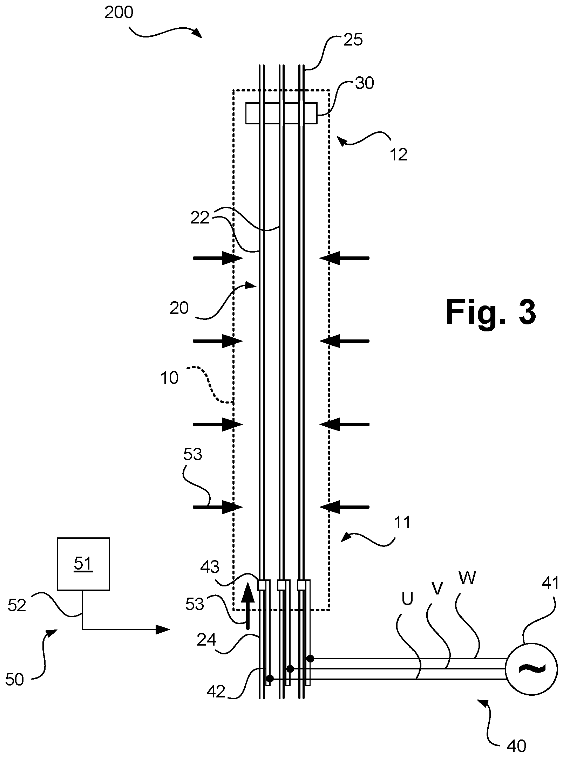

Figur 3, die keine Ausgestaltung der Erfindung darstellt, veranschaulicht schematisch einen Reaktor zur Durchführung einer chemischen Reaktion der insgesamt mit 200 bezeichnet ist.

In dem Reaktor 200 umfassen die hier abweichend mit 22 bezeichneten Rohrstrecken jeweils eine Rohrstrecke 22 von mehreren Reaktionsrohren 20, wobei die Rohrstrecken fluidisch 22 unverbunden nebeneinander in dem Reaktorbehälter 10 angeordnet sind und jeweils mit Einspeiseabschnitten 24 und Entnahmeabschnitten 25 verbunden sind. Zu den übrigen Elementen sei auf die obigen Erläuterungen zu den voranstehenden Figuren ausdrücklich verwiesen.

Wiederum ist die Verwendung eines Verbindungselements 30 im Rahmen der vorliegenden Erfindung optional, wenngleich insbesondere bei einer Verwendung einer mehrphasigen Wechselstromheizung vorteilhaft. Auch hier sind Stromeinspeiseelemente 42 stark vereinfacht veranschaulicht. Die Einspeisung des Inertisierungsgases entsprechend den Pfeilen 53 erfolgt hier wie im Wesentlichen zuvor erläutert. Die Stromeinspeiseelemente 42 können einen daran angebrachten manschettenartigen Bereich 43 aufweisen, der in dem ersten Bereich 11 um die Reaktionsrohre 20 bzw. die Rohrstrecken gelegt ist.

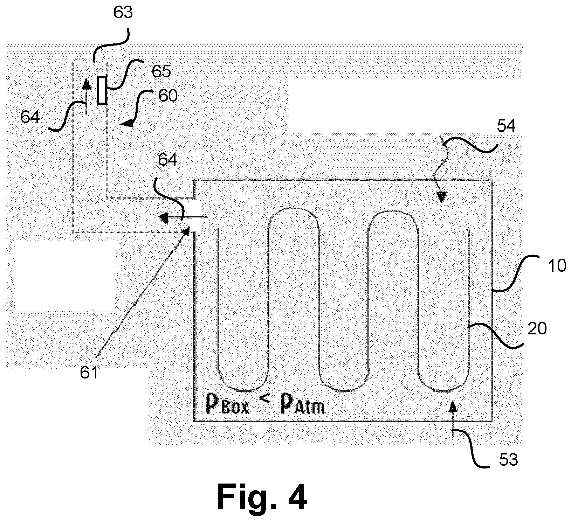

Die Figuren 4 bis 8 zeigen Teilansichten von Reaktoren gemäß Ausgestaltungen der vorliegenden Erfindung in nochmals vereinfachter Darstellung, wobei jeweils auch ein Kamin 60 veranschaulicht ist. Die Gaseinspeisemittel 50 zur Einspeisung des Inertisierungsgases sind nicht dargestellt, ebensowenig die Mittel 40 zur elektrischen Beheizung. Das Reaktionsrohr 20 ist mit Umkehrbögen gemäß Figur 2 veranschaulicht .

Eine Einspeisung von Inertisierungsgas ist lediglich an einer Stelle mit einem Pfeil 53 angegeben.

Wie in Figur 4 mit einem Pfeil 54 veranschaulicht, kann über einen oder mehrere Falschlufteintritte Falschluft in den Reaktorbehälter 10 gelangen. Der Reaktorbehälter 10 weist in der hier veranschaulichten Ausgestaltung eine dauerhaft geöffnete, an den Kamin 60 angebundene Ausströmöffnung 61 auf. Durch Inertisierungsgaseinspeisung und die hohen Temperaturen im Reaktorbehälter 10 gegenüber einem Ende 63 des Kamins 60 ergibt sich eine mit Pfeilen 64 veranschaulichte Strömung. Die hohen Temperaturen führen zu einem statischen Druck $p_{Box}$ in dem Reaktorbehälter, der unterhalb des Atmosphärendrucks $p_{Atm}$ in der angrenzenden Umgebung liegt, wenn die Inertisierungsgaseinspeisung in angepasster Weise vorgenommen wird. Mit anderen Worten wird hier die Spülgasmenge nicht zu groß gewählt. Bei sehr großer Spülgasmenge würde der Druckverlust im Kamin 60 dazu führen, dass sich der Innendruck in dem Reaktorbehälter 10 an den Außendruck annähert oder diesen sogar übersteigt.

Bei dieser Ausführungsform mit Unterdruck in dem Reaktorbehälter verhindert diese Menge, dass es zu einer Rückströmung von Umgebungsluft in den Reaktorbehälter 10 kommt; zudem werden geringe Falschlufteinträge infolge unzureichender Abdichtung kompensiert. Die Inertisierungsgaszuführung in den Reaktorbehälter 10 kann insbesondere über eine Sauerstoffmessung 65 im Kamin 60 geregelt werden, so dass der Sauerstoffgehalt im Betrieb konstant gehalten werden kann.

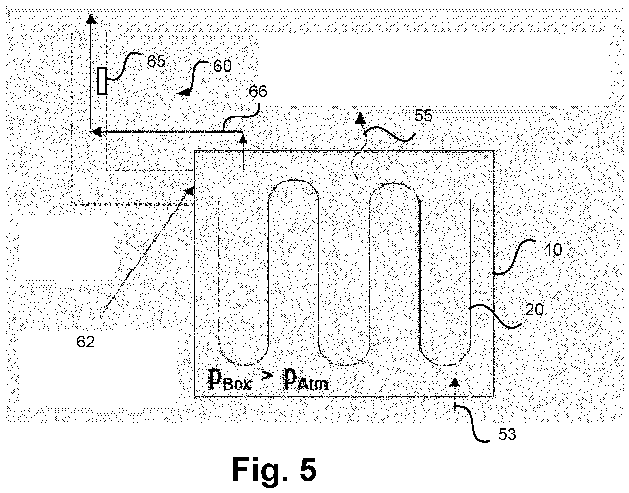

Im Gegensatz zu der Ausgestaltung gemäß Figur 4 wird der Reaktorbehälter 10 gemäß Figur 5 auf einem überatmosphärischen Druckniveau betrieben, wobei eine kontinuierliche Einspeisung von Inertisierungsgas in den Reaktorbehälter 10 vorgenommen wird. Der Reaktorbehälter 10 weist dabei eine zur Öffnung oberhalb eines vorgegebenen Druckniveaus eingerichtete Ausströmöffnung 62, beispielsweise in Form einer Berstscheibe, auf.

Bei dieser alternativen Ausführung mit Überdruckbetrieb kompensiert die Inertisierungsgaszuführung geringe Gasleckagen in die Atmosphäre, die hier mit einem Pfeil 55 veranschaulicht sind. Die Regelung der Spülmenge kann in diesem Fall über eine Druckmessung in dem Reaktorbehälter 10 erfolgen. Für die kontinuierliche Inertisierungsgasspülung kann eine entsprechend dimensionierte Auslassöffnung zu einer sicheren Stelle vorgesehen sein (im Bereich des Kamins 60 oder einer anderen nicht einfach zugänglichen und nicht personengefährdenden Stelle), so dass sich ein Strom 66 aus dem Reaktorbehälter 10 ergibt.

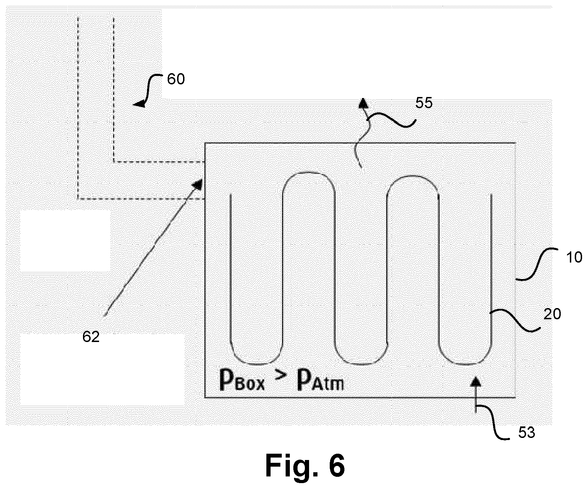

Wie in der Ausgestaltung gemäß Figur 5 wird der Reaktorbehälter 10 gemäß Figur 6 auf einem überatmosphärischen Druckniveau betrieben. Der Reaktorbehälter 10 weist dabei auch hier eine zur Öffnung oberhalb eines vorgegebenen Druckniveaus eingerichtete Ausströmöffnung 62, beispielsweise in Form einer Berstscheibe, auf. Es ist jedoch keine kontinuierliche Durchströmung mit Inertgas vorgesehen, so dass sich der Strom 66 in dieser Ausgestaltung nicht ausbildet.

In dieser alternativen Ausführung mit Überdruckbetrieb wird beispielsweise lediglich während der Betriebsvorbereitung eine Spülung zur Erstinertisierung vorgenommen. Im weiteren Betrieb wird kontinuierlich oder intervallweise lediglich die Ausgleichsmenge an Inertgas für die Leckageströme aus der dem Reaktorbehälter an die Atmosphäre hinzugeführt. Bei dieser Ausführung gibt es somit im Normalbetrieb keinen dauerhaft geöffneten Auslass für Inertgas an die Atmosphäre.

Ein Betrieb des Reaktors mit Kohlenwasserstoffen wird in den Ausgestaltungen gemäß den Figuren 4 bis 6 vorteilhafterweise erst bei Unterschreitung eines geforderten Sauerstoffgehalts freigegeben.

Bei den Ausführungen gemäß Figur 4 und 5 mit kontinuierlicher Spülung erfolgt die Messung des Sauerstoffgehalts bevorzugt in der Abführung des Spülgases stromab des Reaktorbehälters 10 (z.B. im Kamin 60 oder einer sonstigen Abführleitung). Zusätzlich oder alternativ kann der Sauerstoffgehalt auch mittels geeigneter Messverfahren (z.B. Tunable Diode Laser, Zirkonoxid-Sonden, GC, Paramagnet) auch an einer oder mehreren Stellen im Bereich des Reaktorbehälters 10 gemessen werden. Bei der Ausführung gemäß Figur 6 kann analog die Messung des Sauerstoffgehalts in einer für die Erstinertisierung ggf. verwendeten Spülgasabführleitung und/oder in dem Reaktorbehälter 10 selbst erfolgen. Zusätzlich kann nach den Ausführungen gemäß der Figuren 5 und 6 der Druck innerhalb der Reaktorbehälters kontinuierlich gemessen und überwacht werden, um frühzeitig unzulässigen Inertgasverlust zu detektieren.

Wie in weiter untenstehenden detaillierteren Zeichnungen angedeutet, kann der Kamin 60 in allen zuvor veranschaulichten Ausgestaltungen insbesondere Im Bereich der Kaminwand konstruktive Elemente (sog. velocity seals/Confusor) zur Vermeidung von Luftrückströmungen (z.B. aufgrund freier Konvektionsströmungen) zurück zum Reaktorbehälter 20 aufweisen.

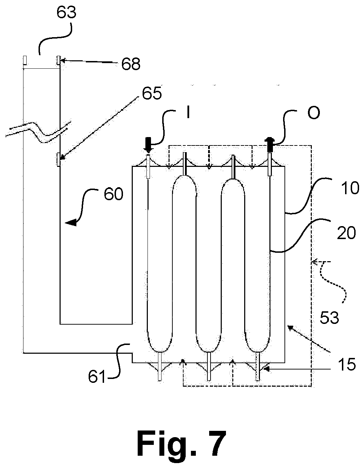

Figur 7 veranschaulicht schematisch einen Reaktor zur Durchführung einer chemischen Reaktion gemäß einer Ausgestaltung der Erfindung in Erweiterung zur Darstellung gemäß den vorigen Figuren, wobei zuvor bereits erläuterten Elemente teils nicht erneut veranschaulicht sind. Zur weiteren Erläuterung wird insbesondere auf die obige Figur 4 verwiesen.

Wie hier veranschaulicht, können im Bereich des Kaminaustritts 63 zusätzlich Zündvorrichtungen oder Pilotbrenner 68 installiert werden, um im Havariefall den Austritt unverbrannter Kohlenwasserstoffe in die Atmosphäre zumindest teilweise zu unterbinden. Wie ferner veranschaulicht, kann das Inertisierungsgas an unterschiedlichen Seiten in den Reaktorbehälter 10 eingespeist werden. Mit 15 sind eine Wand des Reaktorbehälters 10 und Wanddurchtritte von Befestigungen oder Stromeinspeiseeinrichtungen veranschaulicht, die jeweils vorteilhafterweise gasdicht ausgebildet werden können. Mit I und O ist eine Einspeisung von Prozessgas und eine Entnahme des Prozessgases aus dem Reaktionsrohr 20 dargestellt.

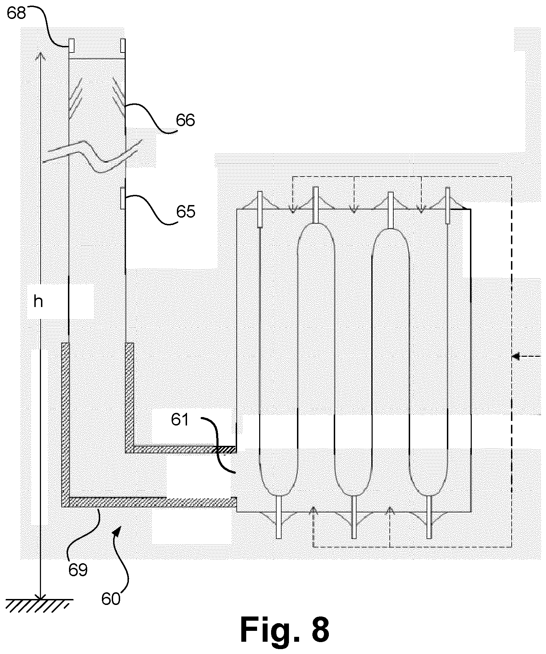

Figur 8 veranschaulicht schematisch einen Reaktor zur Durchführung einer chemischen Reaktion gemäß einer Ausgestaltung der Erfindung in Erweiterung zur Darstellung gemäß Figur 7 bzw. eine Variante hiervon. Bereits zu Figur 7 erläuterte Komponenten sind hier teilweise nicht erneut mit Bezugszeichen versehen.

Wie hier veranschaulicht, kann der Kamin 60 in einem sich an den Reaktorbehälter 10 anschließenden Bereich eine geeignete Isolierung 69 aufweisen. Der Kamin 70 kann eine Höhe h von beispielsweise 20 bis 50 Metern über Grund aufweisen. Ein sogenanntes Velocity Seal 66 kann im Kamin 60 bereitgestellt sein.

Figur 9 veranschaulicht schematisch Grundlagen einer Kamindimensionierung gemäß einer Ausgestaltung der vorliegenden Erfindung in Form eines Diagramms, in dem ein Sauerstoffgehalt in Prozent auf der Abszisse und eine reaktionsbedingte Volumenzunahmerate in m$^3$/s auf der Ordinate dargestellt sind. Ein Graph 601 stellt den bereits oben unter Bezugnahme auf die Tabelle erläuterten Zusammenhang dar. Eine gestrichelte Linie 602 bezeichnet für eine maximale Druckzunahme von 20 mbar erforderliche Werte bei einem Kamindurchmesser von 500 mm, eine gestrichelte Linie 603 bezeichnet entsprechende Werte bei einem Kamindurchmesser von 900 mm.

**Patentansprüche**

1. Reaktor (100, 200) zur Durchführung einer chemischen Reaktion, der einen Reaktorbehälter (10), ein oder mehrere Reaktionsrohre (20) und Mittel (40) zur elektrischen Beheizung des einen oder der mehreren Reaktionsrohre (20) aufweist, wobei die Reaktionsrohre (20) mit zumindest einem Umkehrbogen durch den Reaktor (100, 200) geführt sind oder ohne Umkehrbogen durch diesen verlaufen, **dadurch gekennzeichnet, dass** der Reaktorbehälter (10) eine oder mehrere, dauerhaft geöffnete oder zur Öffnung oberhalb eines vorgegebenen Druckniveaus eingerichtete Ausströmöffnungen (61, 62) aufweist, und dass Gaseinspeisemittel (50) bereitgestellt sind die dafür eingerichtet sind, in den Reaktorbehälter (10) ein Inertisierungsgas einzuspeisen, und dass Mittel bereitgestellt sind, die dafür eingerichtet sind, einen Reaktionsbetrieb zu unterbinden, wenn ein in dem Reaktorbehälter (10) und/oder in einer Abführleitung stromab des Reaktorbehälters gemessener Sauerstoffgehalt und/oder Druck und/oder Kohlenwasserstoffgehalt einen jeweils vorgegebenen Wert übersteigt.

2. Reaktor (100, 200) nach Anspruch 1, der zur Durchführung der chemischen Reaktion auf einem Temperaturniveau von mehr als 500 °C, insbesondere von 700 °C bis 1.000 °C, eingerichtet ist.

3. Reaktor (100, 200) nach Anspruch 1 oder 2, bei dem die eine oder die mehreren Ausströmöffnungen (61) dauerhaft geöffnet ist oder sind.

4. Reaktor (100, 200) nach Anspruch 1 oder 2, bei dem die eine oder die mehreren Ausströmöffnungen (62) unterhalb des vorgegebenen Druckniveaus verschlossen und bei Erreichen des vorgegebenen Druckniveaus für eine zeitweise oder dauerhafte Öffnung eingerichtet ist oder sind.

5. Reaktor (100, 200) nach einem der vorstehenden Ansprüche, bei dem die Gaseinspeisemittel (50) für eine kontinuierliche Einspeisung des Inertisierungsgases in den Reaktorbehälter (10) eingerichtet sind.

6. Reaktor (100, 200) nach einem der vorstehenden Ansprüche, bei dem die Gaseinspeisemittel (50) für eine einmalige oder periodische Beaufschlagung des Reaktorbehälters (10) mit dem Inertisierungsgas eingerichtet sind.

7. Reaktor (100, 200) nach Anspruch 3, bei dem der Reaktorbehälter (10) für einen Betrieb auf einem unteratmosphärischen Druckniveau eingerichtet ist und Mittel zur Bildung einer Gasströmung aus dem Reaktorbehälter (10) aufweist.

8. Reaktor (100, 200) nach Anspruch 4, bei dem der Reaktorbehälter (10) für einen Betrieb auf einem überatmosphärischen Druckniveau eingerichtet ist.

**9.** Reaktor (100, 200) nach einem der vorstehenden Ansprüche, bei dem die Gaseinspeisemittel (50) dafür eingerichtet sind, als das Inertisierungsgas ein Gas oder ein Gasgemisch bereitzustellen, das Stickstoff, Kohlendioxid und/oder Argon in einem jeweils überatmosphärischen Gehalt aufweist.

**10.** Reaktor (100, 200) nach einem der vorstehenden Ansprüche, bei dem die eine oder die mehreren Ausströmöffnungen (61, 62) mit einem oder mit mehreren Kaminen (60) verbunden ist oder sind.

**11.** Reaktor (100, 200) nach Anspruch 10, bei dem die Gaseinspeisemittel (50) dafür eingerichtet sind, einen Maximalsauerstoffgehalt in dem Reaktionsbehälter (10) auf Grundlage einer Dimensionierung des oder der Kamine (60) einzustellen.

**12.** Reaktor (100, 200) nach einem der vorstehenden Ansprüche, bei dem die Gaseinspeisemittel (50) dafür eingerichtet sind, eine Menge des Inertisierungsgases auf Grundlage einer Sauerstoffmessung zu regeln.

**13.** Verfahren zur Durchführung einer chemischen Reaktion, bei dem ein Reaktor (100, 200) verwendet wird, der einen Reaktorbehälter (10), ein oder mehrere Reaktionsrohre (20) und Mittel (40) zur elektrischen Beheizung des einen oder der mehreren Reaktionsrohre (20) aufweist, wobei die Reaktionsrohre (20) mit zumindest einem Umkehrbogen durch den Reaktor (100, 200) geführt sind oder ohne Umkehrbogen durch diesen verlaufen, **dadurch gekennzeichnet, dass** als der Reaktorbehälter (10) ein Reaktorbehälter (10) verwendet wird, der eine oder mehrere, dauerhaft geöffnete oder zur Öffnung oberhalb eines vorgegebenen Druckniveaus eingerichtete Ausströmöffnungen (61, 62) aufweist, und unter Verwendung von Gaseinspeisemitteln (50) in den Reaktorbehälter (10) ein Inertisierungsgas eingespeist wird, und dass Mittel verwendet werden, die dafür eingerichtet sind, einen Reaktionsbetrieb zu unterbinden, wenn ein in dem Reaktorbehälter (10) und/oder in einer Abführleitung stromab des Reaktorbehälters gemessener Sauerstoffgehalt und/oder Druck und/oder Kohlenwasserstoffgehalt einen jeweils vorgegebenen Wert übersteigt.

**Claims**

**1.** Reactor (100, 200) for carrying out a chemical reaction, which has a reactor vessel (10), one or more reaction tubes (20), and means (40) for the electrical heating of one or more reaction tubes (20), the reaction tubes (20) being guided through the reactor (100, 200) with at least one U-bend or extending through said reactor without U-bends, **character-** **ized in that** the reactor vessel (10) has one or more discharge openings (61, 62) that are permanently open or are designed to open above a predetermined pressure level, and **in that** gas feed means (50) are provided which are designed to feed an inerting gas into the reactor vessel (10), and **in that** means are provided that are designed to prevent a reaction operation if an oxygen content and/or pressure and/or hydrocarbon content measured in the reactor vessel (10) and/or in a discharge line downstream of the reactor vessel exceeds a predetermined value in each case.

**2.** Reactor (100, 200) according to claim 1, which is designed to carry out the chemical reaction at a temperature level of more than 500°C, in particular of 700°C to 1000°C.

**3.** Reactor (100, 200) according to either claim 1 or claim 2, wherein one or more discharge openings (61) are permanently open.

**4.** Reactor (100, 200) according to either claim 1 or claim 2, wherein one or more discharge openings (62) are closed below the predetermined pressure level and are designed to open temporarily or permanently when the predetermined pressure level is reached.

**5.** Reactor (100, 200) according to any of the preceding claims, wherein the gas feed means (50) are designed to continuously feed the inerting gas into the reactor vessel (10).

**6.** Reactor (100, 200) according to any of the preceding claims, wherein the gas feed means (50) are designed to supply the inerting gas to the reactor vessel (10) once or periodically.

**7.** Reactor (100, 200) according to claim 3, wherein the reactor vessel (10) is designed for operation at a subatmospheric pressure level and has means for forming a gas flow from the reactor vessel (10).

**8.** Reactor (100, 200) according to claim 4, wherein the reactor vessel (10) is designed for operation at a superatmospheric pressure level.

**9.** Reactor (100, 200) according to any of the preceding claims, wherein the gas feed means (50) are designed to provide, as the inerting gas, a gas or a gas mixture which has nitrogen, carbon dioxide, and/or argon in a superatmospheric content in each case.

**10.** Reactor (100, 200) according to any of the preceding claims, wherein one or more discharge openings (61, 62) are connected to one or more chimneys (60).

**11.** Reactor (100, 200) according to claim 10, wherein the gas feed means (50) are designed to adjust a maximum oxygen content in the reaction vessel (10) on the basis of a dimensioning of the chimney(s) (60).

**12.** Reactor (100, 200) according to any of the preceding claims, wherein the gas feed means (50) are designed to regulate an amount of inerting gas on the basis of an oxygen measurement.

**13.** Method for carrying out a chemical reaction, wherein a reactor (100, 200) is used, which has a reactor vessel (10), one or more reaction tubes (20), and means (40) for the electrical heating of one or more reaction tubes (20), the reaction tubes (20) being guided through the reactor (100, 200) with at least one U-bend or extending through said reactor without U-bends, **characterized in that** the reactor vessel (10) used is a reactor vessel (10) which has one or more discharge openings (61, 62) that are permanently open or are designed to open above a predetermined pressure level, and an inerting gas is fed into the reactor vessel (10) by using gas feed means (50), and **in that** means are used that are designed to prevent a reaction operation if an oxygen content and/or a pressure and/or a hydrocarbon content measured in the reactor vessel (10) and/or in a discharge line downstream of the reactor vessel exceeds a predetermined value in each case.

**Revendications**

**1.** Réacteur (100, 200) pour la réalisation d'une réaction chimique, lequel présente un récipient de réacteur (10), un ou plusieurs tubes de réaction (20) et des moyens (40) pour le chauffage électrique du ou des tubes de réaction (20), les tubes de réaction (20) étant guidés avec au moins un coude en U à travers le réacteur (100, 200) ou s'étendant sans coude en U à travers celui-ci,
**caractérisé en ce que** le récipient de réacteur (10) présente une ou plusieurs ouvertures d'écoulement (61, 62) ouvertes en permanence ou conçues pour s'ouvrir au-dessus d'un niveau de pression prédéfini, **et en ce que** des moyens d'injection de gaz (50) sont fournis, lesquels sont conçus pour injecter un gaz d'inertage dans le récipient de réacteur (10), **et en ce que** des moyens sont fournis, lesquels sont conçus pour empêcher un fonctionnement pour une réaction lorsqu'une teneur en oxygène et/ou une pression et/ou une teneur en hydrocarbures mesurées dans le récipient de réacteur (10) et/ou dans une conduite d'évacuation en aval du récipient de réacteur dépassent une valeur respectivement prédéfinie.

**2.** Réacteur (100, 200) selon la revendication 1, lequel est conçu pour la réalisation de la réaction chimique à un niveau de température supérieur à 500 °C, en particulier de 700 °C à 1 000 °C.

**3.** Réacteur (100, 200) selon la revendication 1 ou 2, dans lequel la ou les ouvertures d'écoulement (61) sont ouvertes en permanence.

**4.** Réacteur (100, 200) selon la revendication 1 ou 2, dans lequel la ou les ouvertures d'écoulement (62) sont conçues pour être fermées en dessous du niveau de pression prédéfini et pour une ouverture temporaire ou permanente à l'atteinte du niveau de pression prédéfini.

**5.** Réacteur (100, 200) selon l'une des revendications précédentes, dans lequel les moyens d'injection de gaz (50) sont conçus pour une injection continue du gaz d'inertage dans le récipient de réacteur (10).

**6.** Réacteur (100, 200) selon l'une des revendications précédentes, dans lequel les moyens d'injection de gaz (50) sont conçus pour une alimentation unique ou périodique du récipient de réacteur (10) en gaz d'inertage.

**7.** Réacteur (100, 200) selon la revendication 3, dans lequel le récipient de réacteur (10) est conçu pour un fonctionnement à un niveau de pression inférieur à la pression atmosphérique et présente des moyens pour la formation d'un flux de gaz à partir du récipient de réacteur (10).

**8.** Réacteur (100, 200) selon la revendication 4, dans lequel le récipient de réacteur (10) est conçu pour un fonctionnement à un niveau de pression supérieur à la pression atmosphérique.

**9.** Réacteur (100, 200) selon l'une des revendications précédentes, dans lequel les moyens d'injection de gaz (50) sont conçus pour fournir, en tant que gaz d'inertage, un gaz ou un mélange de gaz qui présente de l'azote, du dioxyde de carbone et/ou de l'argon, à une teneur respectivement supérieure à celle de l'atmosphère.

**10.** Réacteur (100, 200) selon l'une des revendications précédentes, dans lequel la ou les ouvertures d'écoulement (61, 62) sont reliées à une ou à plusieurs cheminées (60).

**11.** Réacteur (100, 200) selon la revendication 10, dans lequel les moyens d'injection de gaz (50) sont conçus pour régler une teneur maximale en oxygène dans le récipient de réacteur (10) sur la base d'un dimensionnement de la ou des cheminées (60).

**12.** Réacteur (100, 200) selon l'une des revendications précédentes, dans lequel les moyens d'injection de gaz (50) sont conçus pour réguler une quantité du gaz d'inertage sur la base d'une mesure d'oxygène.

13. Procédé pour la réalisation d'une réaction chimique, dans lequel un réacteur (100, 200) est utilisé, lequel présente un récipient de réacteur (10), un ou plusieurs tubes de réaction (20) et des moyens (40) pour le chauffage électrique du ou des tubes de réaction (20), les tubes de réaction (20) étant guidés avec au moins un coude en U à travers le réacteur (100, 200) ou s'étendant sans coude en U à travers celui-ci, **caractérisé en ce qu'en** tant que récipient de réacteur (10), un récipient de réacteur (10) est utilisé, lequel présente une ou plusieurs ouvertures d'écoulement (61, 62) ouvertes en permanence ou conçues pour s'ouvrir au-dessus d'un niveau de pression prédéfini, et, en utilisant des moyens d'injection de gaz (50), un gaz d'inertage est injecté dans le récipient de réacteur (10), **et en ce que** des moyens sont utilisés, lesquels sont conçus pour empêcher un fonctionnement pour une réaction lorsqu'une teneur en oxygène et/ou une pression et/ou une teneur en hydrocarbures mesurées dans le récipient de réacteur (10) et/ou dans une conduite d'évacuation en aval du récipient de réacteur dépassent une valeur respectivement prédéfinie.

**Fig. 1**

**Fig. 2**

Fig. 3

EP 4 139 035 B1

**Fig. 4**

$P_{Box} < P_{Atm}$

17

65 60 66 55

10 20

62

$P_{Box} > P_{Atm}$

53

# Fig. 5

60

55

62

10

20

53

$P_{Box} > P_{Atm}$

# Fig. 6

Fig. 7

# Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015004121 A1
- EP 3075704 A1
- WO 2015197181 A1
- WO 2020002326 A1
- WO 2019228798 A1
- WO 2017072057 A1
- WO 2004091773 A1

**In der Beschreibung aufgeführte Nicht-Patentliteratur**

- **ARTIKEL.** Ethylene'', ''Gas Production'' und ''Propene. *Ullmann's Encyclopedia of Industrial Chemistry,* 15. Juni 2000